# EUROPEAN PATENT SPECIFICATION

(11) **EP 2 581 783 B1**
(45) Date of publication and mention of the grant of the patent: **16.09.2015**
(21) Application number: 12188070.2
(22) Date of filing: 11.10.2012
(51) Int. Cl.: G02F 1/13

(54) **Display**
Anzeige
Afficheur

(30) Priority: 12.10.2011 JP 2011224976; 31.08.2012 JP 2012191381
(43) Date of publication of application: 17.04.2013
(73) Proprietor: Funai Electric Co., Ltd., Daito-shi, Osaka 574-0013 (JP)
(72) Inventor: Yokawa, Akira, Daito-shi, Osaka 574-0013 (JP); Kita, Yuki, Daito-shi, Osaka 574-0013 (JP); Fujikawa, Akihiro, Daito-shi, Osaka 574-0013 (JP); Fukumoto, Yasuyuki, Daito-shi, Osaka 574-0013 (JP); Mori, Yasuhiro, Daito-shi, Osaka 574-0013 (JP); Suzuki, Yuto, Daito-shi, Osaka 574-0013 (JP); Horiuchi, Hirofumi, Daito-shi, Osaka 574-0013 (JP); Tsuji, Hirohiko, Daito-shi, Osaka 574-0013 (JP); Yamanaka, Takahito, Daito-shi, Osaka 574-0013 (JP); Yonezawa, Hideo, Daito-shi, Osaka 574-0013 (JP)
(74) Representative: Grünecker Patent- und Rechtsanwälte PartG mbB

(56) References cited:
- WO-A2-2009/008618
- JP-A- 2005 209 868
- JP-A- 2007 036 905

## Description

### BACKGROUND OF THE INVENTION

### Field of the Invention

The present invention relates to a display or, as synonymously referred to in this specification, a television set, and more particularly, it relates to a display including a display panel.

### Description of the Background Art

JP 2007 036905 A relates to a mobile terminal device. This document discloses a presser member having a shape of a picture frame.

JP 2005 209868 A refers to an electronic apparatus. The presser members have a shape of a picture frame.

WO 2009/008618 A2 discloses a display device wherein the presser member is formed on the side of the display portion.

A display including a display panel is known in general, as disclosed in Japanese Patent Laying-Open No. 2006-337703, for example.

The aforementioned Japanese Patent Laying-Open No. 2006-337703 discloses a liquid crystal display including a bezelless liquid crystal display panel provided with no bezel holding the liquid crystal display panel, a front cabinet body (front housing) having an opening exposing a display region of the bezelless liquid crystal display panel and a shield frame made of sheet metal provided between the front cabinet body and the bezelless liquid crystal display panel to be in contact with both of the front cabinet body and the bezelless liquid crystal display panel. In this liquid crystal display, the shield frame made of sheet metal presses an edge portion on the front surface side of the bezelless liquid crystal display panel, so that no bezel is employed. The aforementioned Japanese Patent Laying-Open No. 2006-337703 also discloses a structure providing elastic members between a shield frame and a front cabinet body and between the shield frame and a bezelless liquid crystal display panel as another embodiment.

In the liquid crystal display (display) described in the aforementioned Japanese Patent Laying-Open No. 2006-337703, however, the shield frame made of sheet metal presses the edge portion on the front surface side of the bezelless liquid crystal display panel in the state in contact with both of the front cabinet body and the bezelless liquid crystal display panel, and hence chattering noise is disadvantageously generated between the shield frame and the front cabinet body and between the shield frame and the bezelless liquid crystal display panel due to a voice or the like output from a speaker. When the elastic members are provided between the shield frame and the front cabinet body and between the shield frame and the bezelless liquid crystal display panel as in the other embodiment of the aforementioned Japanese Patent Laying-Open No. 2006-337703, generation of chattering noise can be suppressed. However, two elastic members must be provided between the front cabinet body and the bezelless liquid crystal display panel in addition to the shield frame, and hence the interval between the front cabinet body and the bezelless liquid crystal display panel is increased, to disadvantageously increase the thickness of the liquid crystal display.

### SUMMARY OF THE INVENTION

The present invention has been proposed in order to solve the aforementioned problems, and an object of the present invention is to provide a display capable of reducing the number of bezels while suppressing generation of chattering noise as well as increase in thickness.

The above and further objects of the invention are solved by the display according to claim 1. Preferred embodiments are claimed in the dependent claims.

In the display according to the present invention the number of bezels can be reduced by the provision of one or more presser members.

Further, the presser member is constituted of the elastic member and formed to be held between the inner surface of the front housing and the front surface of the display panel in a state in contact with both of the inner surface of the front housing and the front surface of the display panel, whereby generation of chattering noise can be suppressed between the inner surface of the front housing and the front surface of the display panel due to the presser member consisting of the elastic member. In addition, no member other than the presser member is provided between the inner surface of the front housing and the front surface of the display panel on the portion of the edge portion of the display panel provided with the presser member, whereby the interval between the inner surface of the front housing and the front surface of the display panel can be inhibited from increase. Consequently, the thickness of the display can be inhibited from increase. In the display according to the present invention, therefore, the number of bezels can be reduced while suppressing generation of chattering noise as well as increase in thickness. Also in a case where vibration is externally applied to the display in transportation or the like of the display, the presser member consisting of the elastic member can inhibit the inner surface of the front housing and the front surface of the display panel from colliding with each other, whereby the display panel can be prevented from damage resulting from collision with the front housing.

According to structure, the bezel and the presser member can be According to structure, the presser member can ensure the distance

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall perspective view of a liquid crystal television set according to an embodiment of the present invention as viewed from front;
Fig. 2 is an overall perspective view of the liquid crystal television set according to the embodiment of the present invention as viewed from behind;
Fig. 3 is an exploded perspective view showing the liquid crystal television set according to the embodiment of the present invention;
Fig. 4 is a plan view showing an inner surface side of a front housing of the liquid crystal television set according to the embodiment of the present invention;
Fig. 5 is a schematic perspective view for illustrating the front housing, the bezel, the cushioning material, and the liquid crystal display panel of the liquid crystal television set according to the embodiment of the present invention;
Fig. 6 is a plan view showing a state of arrangement of a cushioning material with respect to the liquid crystal display panel and the bezel of the liquid crystal television set according to the embodiment of the present invention;
Fig. 7 is a plan view showing a state of mounting a rear frame of the liquid crystal television set according to the embodiment of the present invention;
Fig. 8 is a sectional view taken along the line 200-200 in Fig. 7;
Fig. 9 is a sectional view taken along the line 300-300 in Fig. 7;
Fig. 10 is a schematic perspective view showing the structure of a liquid crystal television set according to a first modification of the embodiment of the present invention; and
Fig. 11 is a schematic perspective view showing the structure of a liquid crystal television set according to a second modification of the embodiment of the present invention.

### DESCRIPTION OF THE PREFERRED EMBODIMENTS

An embodiment of the present invention is now described with reference to the drawings.

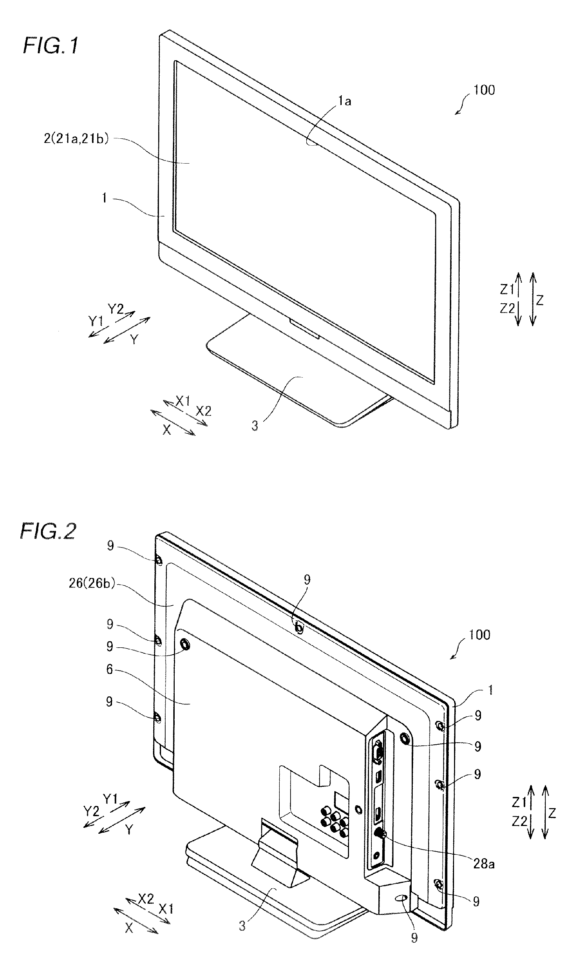

The structure of a liquid crystal television set 100 according to the embodiment of the present invention is described with reference to Figs. 1 to 9. According to this embodiment, the "display" or, as synonymously referred to in this specification, the "television set" in the present invention is applied to the liquid crystal television set 100.

The liquid crystal television set 100 according to the embodiment of the present invention includes a frame-shaped front housing 1, a liquid crystal module 2 arranged at the back (along arrow Y2) of the front housing 1 and a stand member 3 supporting the overall liquid crystal television set 100, as shown in Figs. 1 and 2.

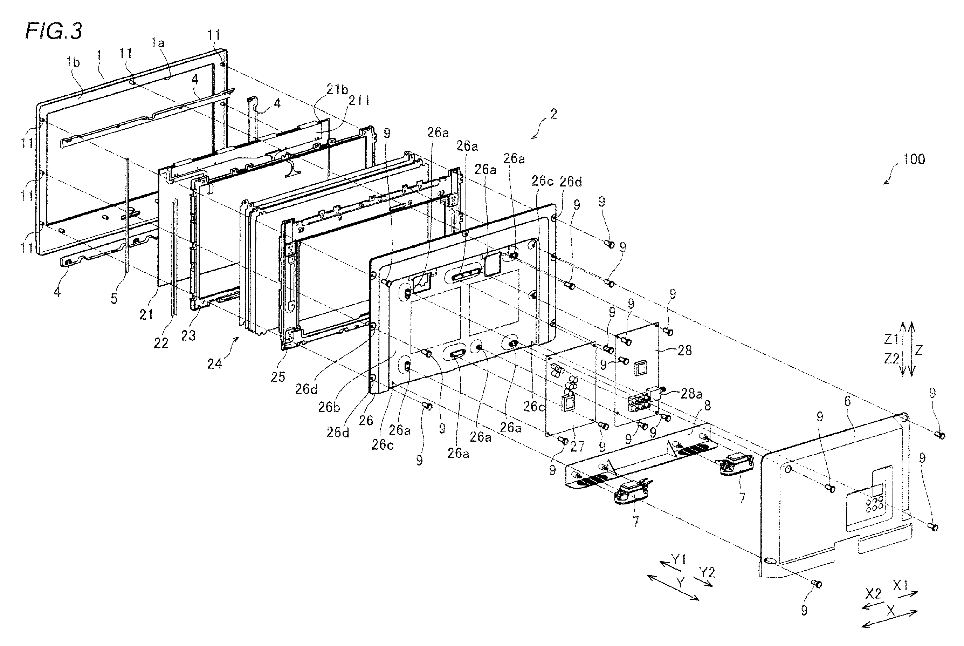

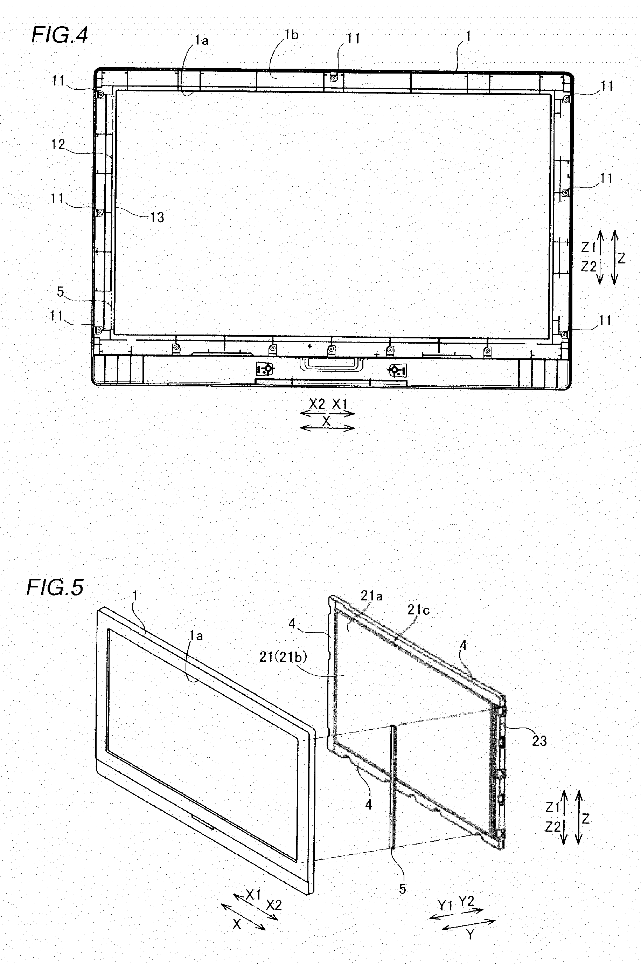

The front housing 1 has a substantially rectangular opening 1a for exposing a rectangular display region 21a (see Fig. 1) of the liquid crystal module 2, as shown in Figs. 1, 3 and 4. A plurality of screw thread portions 11 are integrally formed on an inner surface 1b (along arrow Y2) of the front housing 1 along edge portions, as shown in Figs. 3 and 4. A rib 12 extending in a direction Z along one side of the substantially rectangular opening 1a along arrow X2 is integrally formed on the inner surface 1b (along arrow Y2) of the front housing 1, as shown in Fig. 4. The rib 12 functions as a reinforcing member increasing mechanical strength of the front housing 1, and is also employed for positioning a cushioning member 5 described later with respect to the front housing 1. The rib 12 is an example of the "positioning portion of the front housing" in the present invention.

The liquid crystal module 2 includes a liquid crystal cell portion 21, a light source 22, a resin frame 23, an optical member 24, a frame-shaped holding plate 25 and a rear frame 26 made of sheet metal. More specifically, the holding plate 25, the optical member 24, the frame-shaped resin frame 23 and the liquid crystal cell portion 21 are arranged in this order from the rear frame 26 toward the direction (along arrow Y1) of the front housing 1. The light source 22 constituted of a plurality of LEDs is arranged on a side surface of the resin frame 23 along arrow X2. The liquid crystal cell portion 21 is an example of the "display panel" in the present invention.

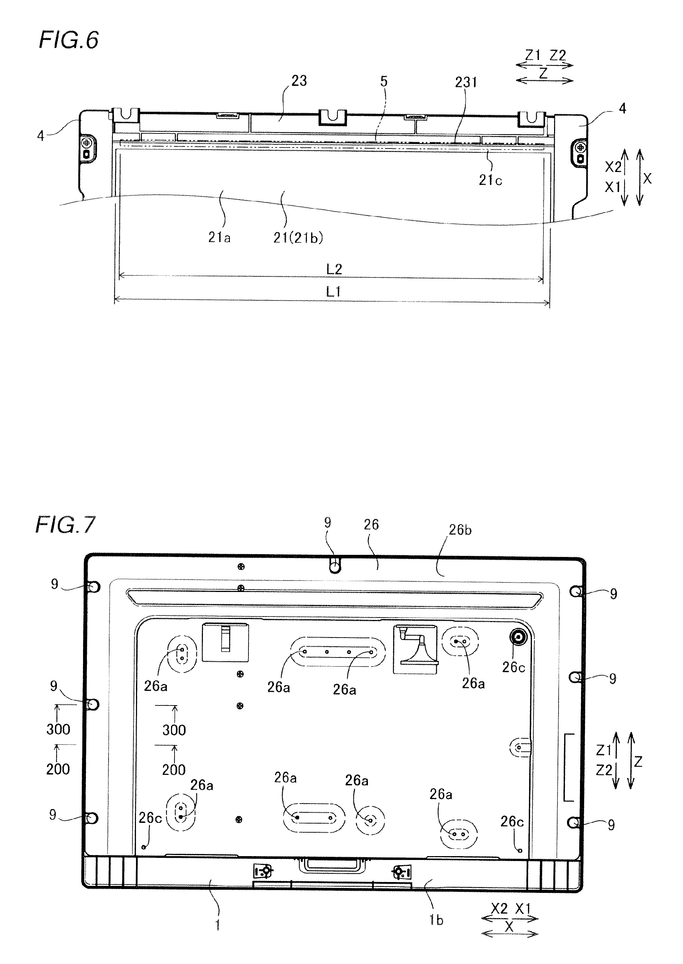

The liquid crystal cell portion 21, constituting a liquid crystal display panel, is mainly constituted of liquid crystal cells, an electrode sheet and the like. Further, the liquid crystal cell portion 21 is formed to be driven in response to television broadcasting received by a receiving portion (tuner) 28a described later to display the television broadcasting. In addition, the liquid crystal cell portion 21 is substantially rectangularly formed in plan view. Further, the liquid crystal cell portion 21 has the rectangular display region 21a and an edge portion (non-display region) 21c provided to surround the display region 21a, as shown in Figs. 5 and 6. According to this embodiment, the liquid crystal cell portion 21 is so formed that three sides of the edge portion 21c (see Fig. 6) on the side of a front surface 21b (along arrow Y1) are pressed by three bezels 4 and the remaining side is pressed by the cushioning member 5. More specifically, the bezels 4 are provided on the upper side (along arrow Z1) provided with a driving circuit 211 (see Fig. 3) of the liquid crystal cell portion 21, the side along arrow X1 provided with a driving circuit (not shown) of the liquid crystal cell portion 21 and the lower side (along arrow Z2) of the edge portion 21c of the substantially rectangular liquid crystal cell portion 21 respectively, while the cushioning member 5 is provided on the side (non-bezelled portion), provided with no bezels 4, of the liquid crystal cell portion 21 along arrow X2. The bezels 4 consist of sheet metal members having substantially L-shaped sections, and are formed to hold the edge portion 21c of the liquid crystal cell portion 21 between the same and the resin frame 23 thereby pressing the front surface of the liquid crystal cell portion 21. The cushioning member 5 is an example of the "presser member" in the present invention. The cushioning member 5 is described later in more detail.

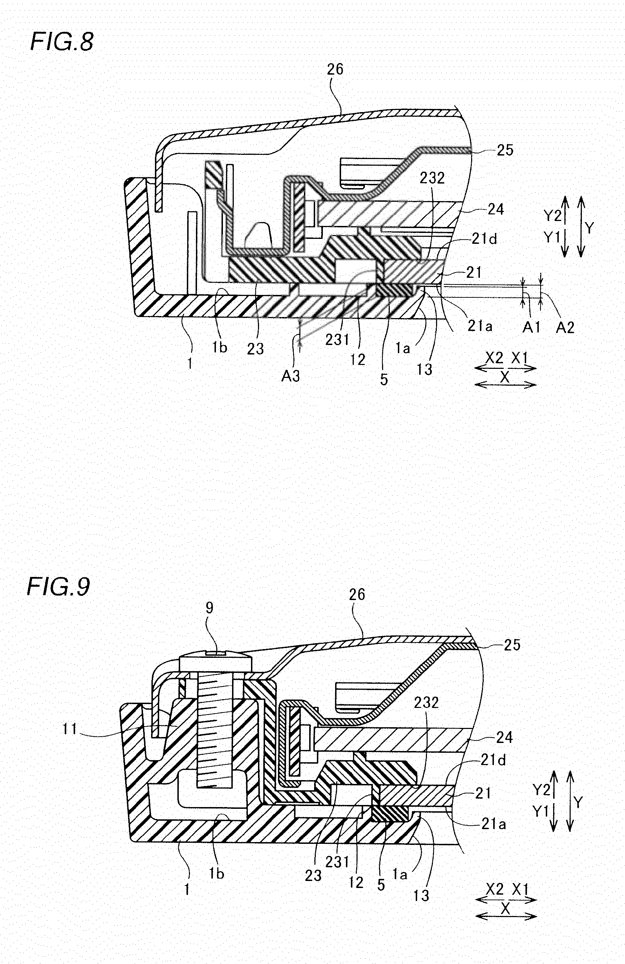

The resin frame 23 is provided in the form of a frame as shown in Figs. 3, 5 and 6, and formed to support the edge portion 21c of the liquid crystal cell portion 21 from behind (along arrow Y2). The resin frame 23 has a rib 231 extending along one side of the edge portion 21c of the liquid crystal cell portion 21 along arrow X2 (extending in the direction Z), as shown in Fig. 6. The rib 231 is integrally formed on the resin frame 23 to protrude frontward (along arrow Y1) from a placing surface 232 coming into contact with a rear surface 21d of the liquid crystal cell portion 21, as shown in Fig. 8. Thus, the liquid crystal cell portion 21 is supported by the placing surface 232 of the resin frame 23 from behind, and positioned by the rib 231, which in turn regulates movement of the liquid crystal cell portion 21 in a direction X. The rib 231 is formed to regulate backward movement (along arrow Y2) of the cushioning member 5 while positioning the liquid crystal cell portion 21. The resin frame 23 is an example of the "frame portion" in the present invention, and the rib 231 is an example of the "positioning portion of the frame portion" in the present invention. The placing surface 232 is an example of the "support portion" in the present invention.

The optical member 24 is mainly constituted of an optical reflection sheet, a light guide, a diffusion sheet, a lens sheet and the like. The optical member 24 is held between the resin frame 23 and the holding plate 25.

The rear frame 26 has a substantially rectangular shape in plan view, as shown in Figs. 2 and 3. The rear frame 26 has a plurality of board mounting threaded holes 26a, and is so formed that a circuit board 27 for supplying power to the overall television set 100 and a signal processing circuit board 28 provided with the receiving portion (tuner) 28a capable of receiving the television broadcasting are mountable on a rear surface 26b (along arrow Y2) of the rear frame 26, as shown in Fig. 3. Further, the rear frame 26 also has a plurality of cover mounting threaded holes 26c, and is so formed that a cover member 6 concavely formed for covering the circuit boards 27 and 28 is mounted thereon, as shown in Figs. 2 and 3. The cover member 6 has a substantially rectangular shape and is formed to be smaller than the rear frame 26 as viewed from behind (along arrow Y2). Thus, portions of the rear surface 26b of the rear frame 26 in the vicinity of edge portions are exposed, as shown in Fig. 2. In other words, a rear housing of the liquid crystal television set 100 is constituted of the cover member 6 and the portions, exposed from the cover member 6, of the rear frame 26 in the vicinity of the edge portions. The rear frame 26 is an example of the "rear housing" in the present invention.

As shown in Figs. 2 and 3, a plurality of screw receiving holes 26d capable of receiving a plurality of screws 9 are formed in the exposed portions in the vicinity of the edge portions of the rear frame 26. The rear frame 26 is so formed that the screws 9 inserted into the screw receiving holes 26a are fitted with the screw thread portions 11 of the front housing 1 thereby mounting the rear frame 26 on the front housing 1, as shown in Figs. 3 and 7. Two speakers 7 are provided on the rear surface 26b of the rear frame 26, as shown in Fig 3. The speakers 7 are formed to be held between the rear frame 26 and the cover member 6 through a speaker mounting portion 8.

According to this embodiment, the cushioning member 5 is a nonconductive elastic member consisting of a rubber member. The cushioning member 5 is provided to be in contact with both of the inner surface 1b (along arrow Y2) of the front housing 1 and the front surface 21b of the liquid crystal cell portion 21. Further, the cushioning member 5 is formed to linearly extend in the direction Z along one side of the edge portion 21c of the liquid crystal cell portion 21 along arrow X2, as shown in Fig. 6. In addition, the cushioning member 5 has a length L2 slightly smaller than the length (width in the direction Z) L1 of one side of the rectangular display region 21a along arrow X2.

The cushioning member 5 is arranged between the rib 12 of the front housing 1 and an edge portion 13 of the opening 1a along the rib 12, as shown in Figs. 4 and 8. The edge portion 13 of the opening 1a of the front housing 1 is formed to protrude backward (along arrow Y2) from the inner surface 1b of the front housing 1 as shown in Fig. 8, and the cushioning member 5 is arranged between the rib 12 and the edge portion 13 to be positioned. The cushioning member 5 is formed to be held between the inner surface 1b (along arrow Y2) of the front housing 1 and the front surface 21b of the liquid crystal cell portion 21 on the non-bezelled portion (along arrow X2) of the edge portion 21c of the liquid crystal cell portion 21 thereby pressing the edge portion 21c on the front surface 21b of the liquid crystal cell portion 21. Further, the cushioning member 5 has a thickness A3 larger than the backward protrusion height A1 (along arrow Y2) of the edge portion 13 and smaller than the distance A2 between the inner surface 1b of the front housing 1 and the liquid crystal cell portion 21. In other words, the thickness A3 of the cushioning member 5 may be smaller than the distance A2 between the inner surface 1b of the front housing 1 and the liquid crystal cell portion 21, so far as the same is larger than the protrusion height A1 of the edge portion 13. The cushioning member 5 is formed to press the edge portion 21c on the front surface 21b of the liquid crystal cell portion 21 in a state where the liquid crystal cell portion 21 is positioned by the rib 231 of the resin frame 23, as shown in Figs. 6, 8 and 9. Further, the cushioning member 5 is formed to press the edge portion 21c of the liquid crystal cell portion 21 supported by the placing surface 232 from behind (along arrow Y2), as shown in Figs. 8 and 9. In addition, the cushioning member 5 is formed to press the edge portion 21c of the liquid crystal cell portion 21 in a state partially projecting from the liquid crystal cell portion 21 as viewed from front (along arrow Y1). More specifically, the cushioning member 5 is formed to press the edge portion 21c of the liquid crystal cell portion 21 over the edge portion 21c of the liquid crystal cell portion 21 and the rib 231 of the resin frame 23, as shown in Figs. 6 and 8.

The cushioning member 5 has a flat sectional shape in the state held between the inner surface 1b of the front housing 1 and the front surface 21b of the liquid crystal cell portion 21, as shown in Figs. 8 and 9. Thus, the cushioning member 5 is capable of pressing the edge portion 21c of the liquid crystal cell portion 21 in a surface contact state. Further, the cushioning member 5 is formed to be held between the inner surface 1b of the front housing 1 and the front surface 21b of the liquid crystal cell portion 21 when the rear frame 26 is mounted on the front housing 1 with the screws 9, as shown in Fig. 9. In other words, the cushioning member 5 is formed to press the edge portion 21c of the liquid crystal cell portion 21 through holding force by the rear frame 26 and the front housing 1.

According to this embodiment, as hereinabove described, the cushioning member 5 held between the inner surface 1b of the front housing 1 and the front surface 21b of the liquid crystal cell portion 21 to press the edge portion 21c on the front surface 21b of the liquid crystal cell portion 21 is provided on the non-bezelled portion, provided with no bezels 4 for holding the liquid crystal cell portion 21, of the edge portion 21c of the liquid crystal cell portion 21 so that the edge portion 21c on the front surface 21b of the liquid crystal cell portion 21 may not be pressed with bezels 4 on the portion of the edge portion 21c of the liquid crystal cell portion 21 provided with the cushioning member 5, whereby the number of the bezels 4 can be reduced. Further, the elastic cushioning member 5 is formed to be held between the inner surface 1b of the front housing 1 and the front surface 21b of the liquid crystal cell portion 21 in the state contactable with both of the inner surface 1b of the front housing 1 and the front surface 21b of the liquid crystal cell portion 21, whereby the cushioning member 5 consisting of the elastic member can suppress generation of chattering noise between the inner surface 1b of the front housing 1 and the front surface 21b of the liquid crystal cell portion 21. In addition, no member other than the cushioning member 5 is provided between the inner surface 1b of the front housing 1 and the front surface 21b of the liquid crystal cell portion 21 on the portion of the edge portion 21c of the liquid crystal cell portion 21 provided with the cushioning member 5, whereby the interval between the inner surface 1b of the front housing 1 and the front surface 21b of the liquid crystal cell portion 21 can be inhibited from increase. Consequently, the thickness of the liquid crystal television set 100 can be inhibited from increase. In the liquid crystal television set 100 according to this embodiment, therefore, the number of the bezels 4 can be reduced while suppressing generation of chattering noise as well as increase in thickness. The present invention capable of reducing the number of the bezels 4, made of sheet metal or the like, relatively large in weight while suppressing generation of chattering noise as well as increase in thickness is more effective for the liquid crystal television set 100 according to this embodiment strongly required to be reduced in weight and thickness.

According to this embodiment, as hereinabove described, the bezels 4 are provided on the three sides of the edge portion 21c of the substantially rectangular liquid crystal cell portion 21 while the cushioning member 5 is provided on the non-bezelled portion of the edge portion 21c of the substantially rectangular liquid crystal cell portion 21. Thus, the bezels 4 and the cushioning member 5 can be employed together for pressing the edge portion 21c of the substantially rectangular liquid crystal cell portion 21.

According to this embodiment, as hereinabove described, the cushioning member 5 is formed to linearly extend along one side of the edge portion 21c of the liquid crystal cell portion 21. Thus, the linearly extending cushioning member 5 can stably press the region along one side of the liquid crystal cell portion 21.

According to this embodiment, as hereinabove described, the cushioning member 5 is formed to have the length L2 smaller than the length L1 of one side of the display region 21a of the liquid crystal cell portion 21 in the extensional direction (direction Z) of the cushioning member 5. Thus, the cushioning member 5 can stably press the edge portion 21c on the front surface 21b of the liquid crystal cell portion 21 while being inhibited from increase in length.

According to this embodiment, as hereinabove described, the cushioning member 5 is formed to press the edge portion 21c on the front surface 21b of the liquid crystal cell portion 21 in the state positioned by the rib 231 of the resin frame 23. Thus, the rib 231 suppresses deviation of the position of the liquid crystal cell portion 21, whereby the cushioning member 5 can more reliably press the edge portion 21c on the front surface 21b of the liquid crystal cell portion 21.

According to this embodiment, as hereinabove described, the rib 231 is formed to regulate backward movement (along arrow Y2) of the cushioning member 5 while positioning the liquid crystal cell portion 21. Thus, the rib 231 positioning the liquid crystal cell portion 21 can also be employed as a regulating member regulating backward movement of the cushioning member 5, whereby the cushioning member 5 can be prevented from backward movement for effectively pressing the edge portion 21c of the liquid crystal cell portion 21 without a separate dedicated regulating member for backward movement of the cushioning member 5.

According to this embodiment, as hereinabove described, the resin frame 23 is provided with the placing surface 232 supporting the edge portion 21c of the liquid crystal cell portion 21 from behind (along arrow Y2), and the cushioning member 5 is formed to press the edge portion 21c of the liquid crystal cell portion 21 supported by the placing surface 232 from behind from the side of the front surface 21b. Thus, the cushioning member 5 can press the side of the front surface 21b of the edge portion 21c of the liquid crystal cell portion 21 in the state where the placing surface 232 of the resin frame 23 supports the edge portion 21c of the liquid crystal cell portion 21 from behind, whereby the side of the front surface 21b of the edge portion 21c of the liquid crystal cell portion 21 can be stably pressed.

According to this embodiment, as hereinabove described, the cushioning member 5 is formed to press the edge portion 21c on the front surface 21b of the liquid crystal cell portion 21 in the state positioned by the rib 12 of the front housing 1. Thus, the rib 12 of the front housing 1 suppresses deviation of the position of the cushioning member 5, whereby the cushioning member 5 can more reliably press the edge portion 21c on the front surface 21b of the liquid crystal cell portion 21.

According to this embodiment, as hereinabove described, the edge portion 13 of the opening 1a of the front housing 1 is formed to protrude backward (along arrow Y2) from the inner surface 1b of the front housing 1, and the cushioning member 5 is formed to be arranged between the rib 12 and the edge portion 13 of the opening 1a of the front housing 1 to be positioned. Thus, the rib 12 and the edge portion 13 of the opening 1a of the front housing 1 can precisely position the cushioning member 5 from both sides.

According to this embodiment, as hereinabove described, the cushioning member 5 is formed to have the flat sectional shape in the state held between the inner surface 1b of the front housing 1 and the front surface 21b of the liquid crystal cell portion 21 and to press the edge portion 21c on the front surface 21b of the liquid crystal cell portion 21 in the surface contact state. Thus, the cushioning member 5, having the flat sectional shape, in surface contact with the edge portion 21c on the front surface 21b of the liquid crystal cell portion 21 presses the edge portion 21 over a wider range, whereby the cushioning member 5 can more reliably and more stably press the edge portion 21c on the front surface 21b of the liquid crystal cell portion 21.

According to this embodiment, as hereinabove described, the cushioning member 5 is formed to be held between the inner surface 1b of the front housing 1 and the front surface 21b of the liquid crystal cell portion 21 to press the edge portion 21c on the front surface 21b of the liquid crystal cell portion 21 when the rear frame 26 is mounted on the front housing 1. Thus, the cushioning member 5 presses the edge portion 21c on the front surface 21b of the liquid crystal cell portion 21 through force for mounting the rear frame 26 on the front housing 1 (force holding the liquid crystal cell portion 21 between the front housing 1 and the rear frame 26), whereby the cushioning member 5 can easily press the edge portion 21c on the front surface 21b of the liquid crystal cell portion 21, without separately providing a dedicated pressing mechanism for pressing the edge portion 21c on the front surface 21b of the liquid crystal cell portion 21.

According to this embodiment, as hereinabove described, the edge portion 13 of the opening 1a of the front housing 1 is formed to protrude backward (along arrow Y2) from the inner surface 1b of the front housing 1, and the cushioning member 5 is formed to have the thickness A3 larger than the protrusion height A1 of the edge portion 13 of the opening 1a. Thus, the cushioning member 5 can ensure the distance A2 between the inner surface 1b of the front housing 1 and the front surface 21b of the liquid crystal cell portion 21 to be larger than the protrusion height A1 of the edge portion 13 of the opening 1a, whereby the edge portion 13 of the opening 1a can be inhibited from coming into contact with the front surface 21b of the liquid crystal cell portion 21, and generation of chattering noise can be suppressed between the edge portion 13 of the opening 1a and the front surface 21b of the liquid crystal cell portion 21 as a result.

Although the present invention has been described and illustrated in detail, it is clearly understood that the same is by way of illustration and example only and is not to be taken by way of limitation, the scope of the present invention being limited only by the terms of the appended claims.

For example, while the "display" according to the present invention is applied to the liquid crystal television set in the aforementioned embodiment, the present invention is not restricted to this. The present invention is also applicable to a display, such as a monitor of a personal computer, for example, other than the liquid crystal television set.

While the bezels are provided on three sides of the edge portion of the substantially rectangular liquid crystal cell portion and the cushioning member (presser member) is provided on the remaining side of the edge portion of the substantially rectangular liquid crystal cell portion in the aforementioned embodiment, the present invention is not restricted no this. According to the present invention, bezels may be provided on one or two sides so that presser members are provided on the remaining three or two sides. In a case where no bezels are provided on a plurality of sides, a presser member may be provided only on part of the plurality of sides. In other words, some sides may be provided with neither bezels nor presser members, so far as the non-bezelled portion is at least partially provided with the presser member.

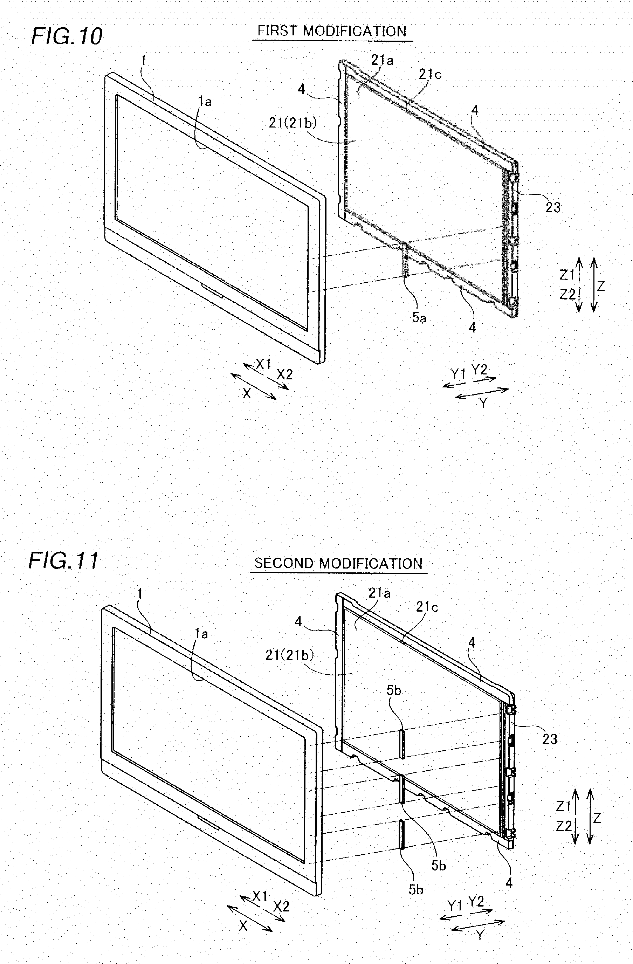

While the cushioning member (presser member) is formed to have the length L2 slightly smaller than the length (width in the direction Z) L1 of one side of the rectangular display region in the aforementioned embodiment, the present invention is not restricted to this. According to the present invention, a cushioning member (presser member) 5a may alternatively be formed to have a length not more than half the length of one side of a rectangular display region, as in a first modification of the embodiment shown in Fig. 10. In this case, the cushioning member (presser member) 5a is preferably arranged on a central portion of one side of the corresponding edge portion of the display panel.

While one cushioning member (presser member) is provided along one side of the edge portion of the liquid crystal cell portion (display panel) on the non-bezelled portion in the aforementioned embodiment, the present invention is not restricted to this. According to the present invention, a plurality of cushioning members (presser members) 5b may alternatively be provided along one side of an edge portion of a display portion on a non-bezelled portion, as in a second modification of the embodiment shown in Fig. 11.

While the cushioning member consists of the rubber member as an example of the presser member consisting of the elastic member in the present invention in the aforementioned embodiment, the present invention is not restricted to this. According to the present invention, a presser member may alternatively consist of an elastic member, such as sponge, for example, other than the rubber member.

While the display panel according to the present invention corresponds to the liquid crystal cell portion in the aforementioned embodiment, the present invention is not restricted to this. The display panel according to the present invention is also widely applicable to a display panel other than a liquid crystal display panel.

## Claims

1. A display (100) comprising:
a display panel (21) of rectangular shape in plan view, the display panel (21) having a rectangular display region (21 a) and a non-display edge portion (21 c) surrounding the display region (21 c) in plan view;
a bezel (4) holding the edge portion (21 c) of said display panel (21) on at least one but not all four sides of the rectangular display panel (21);
a front housing (1), arranged in front of said display panel (21), having an opening (1a) exposing the display region (21 a) of said display panel (21); and
a presser member (5) consisting of an elastic member held between the inner surface (1 b) of said front housing (1) and the front surface (21 b) of said display panel (21), in a surface contact state with both of the inner surface (1b) of said front housing (1) and the front surface (21 b) of said display panel (21), and on the edge portion (21 c) of said display panel (21) at a bezel-free side not provided with said bezel (4), thereby pressing said edge portion (21c) on the front surface side of said display panel (21), wherein
said presser member (5) linearly extends along said bezel-free side of said edge portion (21c) of said display panel (21).

2. The display according to claim 1, wherein
said presser member (5) has a length smaller than the length of the corresponding side of said display region (21a) of said display panel (21) in the extension direction of the presser member (5).

3. The display according to claim 1 or 2, wherein
a plurality of said presser members (5) are provided along said bezel-free side of said edge portion (21 c) of said display panel (21).

4. The display according to claim 1, further comprising a frame portion (23) supporting
said edge portion (21c) of said display panel (21) from the rear surface (21d) of the display panel (21) and including a positioning portion (231) extending along said edge portion (21c) of said display panel (21) to laterally position said display panel (21).

5. The display according to claim 4, wherein
said presser member (5) is arranged to extend over said bezel-free side of said edge portion (21 c) on the front surface of said display panel (21) and along said positioning portion (231).

6. The display according to claim 4, wherein
said positioning portion (231) of the frame portion (23) is formed to regulate backward movement of the presser member (5) while laterally positioning said display panel (21).

7. The display according to claim 4, wherein
said frame portion (23) further includes a support portion (232) supporting said edge portion (21c) of said display panel (21) from the rear surface (21d) of the display panel (21).

8. The display according to claim 1, wherein
said front housing (1) includes a positioning portion (12) positioning said presser member (5) with respect to said front housing (1).

9. The display according to claim 8, wherein
an edge portion (13) of said opening (1a) of said front housing (1) is formed to protrude backward from the inner surface (1b) of said front housing (1), and said presser member (5) is positioned by being arranged between said positioning portion (12) of the front housing (1) and said edge portion (13) of said opening (1 a) of said front housing (1).

10. The display according to claim 1, wherein
said presser member (5) consisting of said elastic member is made of a nonconductive cushioning material.

11. The display according to claim 1, wherein
said presser member (5) has a flat sectional shape in the state held between the inner surface (1b) of said front housing (1) and the front surface (21 b) of said display panel (21) in a surface contact state.

12. The display according to claim 1, further comprising a rear housing (26) arranged at the back of said display panel (21) and mounted on said front housing (1) in a state holding said display panel (21) between said rear housing and said front housing (1), wherein said presser member (5) is held between the inner surface (1b) of said front housing (1) and the front surface (21 b) of said display panel (21) thereby pressing said edge portion (21 c) on the front surface side of said display panel (21) when said rear housing is coupled to said front housing (1).

13. The display according to claim 1, wherein
an edge portion (13) of said opening (1a) of said front housing (1) protrudes backward from the inner surface (1b) of said front housing (1), and said presser member (5) has a thickness larger than the protrusion height of said edge portion (13) of said opening (1a).

## Patentansprüche

1. Anzeige (100), umfassend:
ein Anzeigetafel (21), die in einer Draufsicht eine rechteckige Form umfasst, wobei die Anzeigetafel (21) in der Draufsicht einen rechteckigen Anzeigebereich (21 a) und einen Nicht-Anzeige-Randabschnitt (21 c), der den Anzeigebereich (21 a) umgibt, aufweist;
eine Einfassung (4), die den Randabschnitt (21 c) der Anzeigetafel (21) an wenigstens einer, aber nicht an allen vier Seiten der rechteckigen Anzeigetafel (21) hält,
ein vorderes Gehäuse (1), das gegenüber der Anzeigetafel (21) angeordnet ist und das eine Öffnung (1a) umfasst, um den Anzeigebereich (21a) der Anzeigetafel (21) freizulegen; und
ein Presselement (5) aus einem elastischen Element, das zwischen der Innenfläche (1 b) des vorderen Gehäuses (1) und der Vorderfläche (21 b) der Anzeigetafel (21) in einem Oberflächenkontaktzustand mit sowohl der Innenfläche (1b) des vorderen Gehäuses (1) als auch der Vorderfläche (21 b) der Anzeigetafel (21) sowie auf dem Randabschnitt (21 c) der Anzeigetafel (21) an einer einfassungsfreien Seite, die nicht mit der Einfassung (4) versehen ist, gehalten wird, wodurch der Randabschnitt (21c) gegen die Vorderflächenseite der Anzeigetafel (21) gedrückt wird, wobei
sich das Presselement (5) linear entlang der einfassungsfreien Seite des Randabschnitts (21 c) der Anzeigetafel (21) erstreckt.

2. Anzeige nach Anspruch 1, wobei das Presselement (5) eine Länge aufweist, die kürzer als die Länge der entsprechenden Seite des Anzeigebereichs (21 a) der Anzeigetafel (21) in der Erstreckungsrichtung des Druckelements (5) ist.

3. Anzeige nach Anspruch 1 oder 2, wobei eine Vielzahl von Presselementen (5) entlang der einfassungsfreien Seite des Randabschnitts (21 c) des Anzeigefeldes (21) vorgesehen ist.

4. Anzeige nach Anspruch 1, weiter umfassend einen Rahmenabschnitt (23), der den Randabschnitt (21c) der Anzeigetafel (21) von der Rückseitenfläche (21d) der Anzeigetafel (21) hält und der einen Positionierungsabschnitt (231) umfasst, der sich entlang des Randabschnitts (21c) der Anzeigetafel (21) erstreckt, um die Anzeigetafel (21) seitlich zu positionieren.

5. Anzeige nach Anspruch 4, wobei das Presselement (5) angeordnet ist, um sich über die einfassungsfreien Seite des Randabschnitts (21 c) auf der Vorderfläche der Anzeigetafel (21) und entlang des Positionierungsabschnitts (231) zu erstrecken.

6. Anzeige nach Anspruch 4, wobei der Positionierungsabschnitt (231) des Rahmenabschnitts (23) ausgebildet ist, um während des seitlichen Positionierens der Anzeigetafel (21) eine Rückwärtsbewegung des Presselements (5) zu steuern.

7. Anzeige nach Anspruch 4, wobei der Rahmenabschnitt (23) ferner einen Stützabschnitt (232) aufweist, der den Randabschnitt (21 c) der Anzeigetafel (21) von der Rückseitenfläche (21 d) der Anzeigetafel ( 21) hält.

8. Anzeige nach Anspruch 1, wobei das vordere Gehäuse (1) einen Positionierungsabschnitt (12) umfasst, um das Presselement (5) bezüglich des vorderen Gehäuses (1) zu positionieren.

9. Anzeige nach Anspruch 8, wobei
ein Randabschnitt (13) der Öffnung (1a) des vorderen Gehäuses (1) ausgebildet ist, um von der Innenfläche (1 b) des vorderen Gehäuses (1) nach hinten vorzuragen, und
das Presselement (5) positionierbar ist, indem es die zwischen dem Positionierungsabschnitt (12) des vorderen Gehäuses (1) und dem Randabschnitt(13) der Öffnung (1a) des vorderen Gehäuses (1) angeordnet wird.

10. Anzeige nach Anspruch 1, wobei das Presselement (5) aus dem elastischen Element gebildet ist, das aus einem nicht leitenden Dämpfungsmaterial hergestellt ist.

11. Anzeige nach Anspruch 1, wobei das Presselement (5) in dem Zustand, bei dem es zwischen der Innenfläche (1 b) des vorderen Gehäuses (1) und der Vorderfläche (21 b) der Anzeigetafel (21) in einem Oberflächenkontaktzustand gehalten wird, eine flache Querschnittform aufweist.

12. Anzeige nach Anspruch 1, die ferner ein hinteres Gehäuse (26) umfasst, das in einem Zustand, bei dem die Anzeigetafel (21) zwischen dem hinteren Gehäuse und dem vorderen Gehäuse (1) gehalten wird, an der Rückseite der Anzeigetafel (21) angeordnet und an dem vorderen Gehäuse (1) befestigt ist;
wobei das Presselement (5) zwischen der Innenfläche (1b) des vorderen Gehäuses (1) und der Vorderfläche (21 b) der Anzeigetafel (21) gehalten wird, wodurch bei der Kopplung des hinteren Gehäuses an das vordere Gehäuse (1), der Randabschnitt (21c) gegen die Vorderflächenseite der Anzeigetafel (21) gedrückt wird.

13. Anzeige nach Anspruch 1, wobei
ein Randabschnitt (13) der Öffnung (1a) des vorderen Gehäuses (1) von der Innenfläche (1 b) des vorderen Gehäuses (1) nach hinten vorragt, und
das Presselement (5) eine Dicke aufweist, die größer als die Höhe des Vorsprungs des Randabschnitts (13) der Öffnung (1a) ist.

## Revendications

1. Afficheur (100) comprenant :
un panneau d'affichage (21) de forme rectangulaire en vue de dessus, le panneau d'affichage (21) possédant une zone d'affichage rectangulaire (21a) et une partie formant bordure sans affichage (21c) entourant la zone d'affichage (21a) en vue de dessus,
un cadran (4) maintenant la partie formant bordure (21c) dudit panneau d'affichage (21) sur au moins un, mais pas sur les quatre, côté du panneau d'affichage rectangulaire (21),
un boîtier avant (1) agencé en face dudit panneau d'affichage (21), comportant une ouverture (1a) dévoilant la zone d'affichage (21a) dudit panneau d'affichage (21), et
un élément de pressage (5) constitué d'un élément élastique maintenu entre la surface interne (1b) dudit boîtier avant (1) et la surface avant (21b) dudit panneau d'affichage (21), dans un état de contact surfacique à la fois avec la surface interne (1b) dudit boîtier avant (1) et avec la surface avant (21b) dudit panneau d'affichage (21), et sur la partie formant bordure (21c) dudit panneau d'affichage (21) au niveau d'un côté sans cadran qui est pas prévu avec ledit cadran (4), en comprimant ainsi ladite partie formant bordure (21c) sur la surface avant dudit panneau d'affichage (21), dans lequel
ledit élément de pressage (5) s'étend linéairement le long dudit côté sans cadran de ladite partie formant bordure (21c) dudit panneau d'affichage (21).

2. Afficheur selon la revendication 1, dans lequel ledit élément de pressage (5) présente une longueur inférieure à la longueur du côté correspondant de ladite zone d'affichage (21a) dudit panneau d'affichage (21) dans la direction d'extension de l'élément de pressage (5).

3. Afficheur selon la revendication 1, dans lequel une pluralité desdits éléments de pressage (5) est prévue le long dudit côté sans cadran de ladite partie de bordure (21c) dudit panneau d'affichage (21).

4. Afficheur selon la revendication 1, comprenant en outre une partie formant châssis (23) supportant ladite partie formant bordure (21c) dudit panneau d'affichage (21) depuis la surface arrière (21d) du panneau d'affichage (21) et incluant une pièce de positionnement (231) s'étendant le long de ladite partie formant bordure (21c) dudit panneau d'affichage (21) afin de positionner latéralement ledit panneau d'affichage (21d).

5. Afficheur selon la revendication 4, dans lequel ledit élément de pressage (5) est agencé pour se prolonger par-dessus ledit coté sans cadran de ladite partie formant bordure (21c) sur la surface avant dudit panneau d'affichage (21) et le long de ladite pièce de positionnement (231).

6. Afficheur selon la revendication 4, dans lequel ladite pièce de positionnement (231) de la partie formant châssis (23) est formée pour contrôler le mouvement vers l'arrière de l'élément de pressage (5) tout en positionnant latéralement ledit panneau d'affichage (21).

7. Afficheur selon la revendication 4, dans lequel ladite partie formant châssis (23) inclut de plus une pièce de support (232) soutenant ladite partie formant bordure (21c) dudit panneau d'affichage (21) depuis la surface arrière (21d) du panneau d'affichage (21).

8. Afficheur selon la revendication 1, dans lequel ledit boîtier avant (1) inclut une partie de positionnement (12) plaçant ledit élément de pressage (5) par rapport au dit boîtier avant (1).

9. Afficheur selon la revendication 8, dans lequel une partie formant bordure (13) de ladite ouverture (1a) dudit boîtier avant (1) est formée pour faire saillie vers l'arrière depuis la surface interne (1b) dudit boîtier avant (1), et
ledit élément de pressage (5) est placé en étant agencé entre ladite partie de positionnement (12) du boîtier avant (1) et ladite partie formant bordure (13) de ladite ouverture (1a) dudit boîtier avant (1).

10. Afficheur selon la revendication 1, dans lequel ledit élément de pressage (5), constitué du dit élément élastique, est réalisé avec un matériau d'amortissement non conducteur.

11. Afficheur selon la revendication 1, dans lequel ledit élément de pressage (5) présente une forme transversale plate quand il est maintenu dans un état de contact surfacique entre la surface interne (1b) dudit boîtier avant (1) et la surface avant (21b) dudit panneau d'affichage (21).

12. Afficheur selon la revendication 1, comprenant en outre un boîtier arrière (26) agencé au dos dudit panneau d'affichage (21) et monté sur ledit boîtier avant (1) en maintenant ledit panneau d'affichage (21) entre ledit boîtier arrière et ledit boîtier avant (1),
ledit élément de pressage (5) étant maintenu entre la surface interne (1b) dudit boîtier avant (1) et la surface avant (21b) dudit panneau d'affichage (21) ce qui comprime ainsi ladite partie formant bordure (21c) sur la surface avant dudit panneau d'affichage (21) lorsque ledit boîtier arrière est accouplé au dit boîtier avant (1).

13. Afficheur selon la revendication 1, dans lequel
une partie formant bordure (13) de ladite ouverture (1a) dudit boîtier avant (1) fait saillie vers l'arrière depuis la surface interne (1b) dudit boîtier avant (1), et ledit élément de pressage (5) présente une épaisseur plus importante que la hauteur de la protubérance de ladite partie formant bordure (13) de ladite ouverture (1a).
